# FASCICULE DE BREVET EUROPEEN

(11) **EP 3 000 634 B1**
(45) Date de publication et mention de la délivrance du brevet: **24.10.2018**
(21) Numéro de dépôt: 15184992.4
(22) Date de dépôt: 14.09.2015
(51) Int. Cl.: B60H 1/22, F24H 1/00

(54) **DISPOSITIF DE CHAUFFAGE AVEC MOYEN DE PROTECTION POUR VÉHICULE AUTOMOBILE COMPRENANT UN ÉLÉMENT CHAUFFANT ET UN BOÎTIER ET INSTALLATION DE CLIMATISATION COMPORTANT CE MÊME DISPOSITIF**
HEIZVORRICHTUNG MIT SCHUTZMITTEL FÜR KRAFTFAHRZEUG, DIE EIN HEIZELEMENT UND EIN GEHÄUSE UMFASST, UND KLIMAANLAGE, DIE DIESE VORRICHTUNG UMFASST
HEATING DEVICE WITH PROTECTION MEANS FOR A MOTOR VEHICLE COMPRISING A HEATING ELEMENT AND A HOUSING, AND AIR-CONDITIONING FACILITY COMPRISING SAID SAME DEVICE

(30) Priorité: 24.09.2014 FR 1459008
(43) Date de publication de la demande: 30.03.2016
(73) Titulaire: VALEO SYSTEMES THERMIQUES, 78320 Le Mesnil Saint-Denis (FR)
(72) Inventeur: TELLIER, Laurent, 75116 PARIS (FR); LEBORGNE, José, 78990 ELANCOURT (FR)
(74) Mandataire: Metz, Gaëlle

(56) Documents cités:
- WO-A1-2011/144976
- WO-A1-2013/076093
- DE-A1-102010 060 446
- FR-A1- 2 987 314
- US-A1- 2014 050 466

## Description

### Domaine technique de l'invention

L'invention concerne un dispositif de chauffage pour véhicule automobile comprenant un élément chauffant et un boîtier ainsi qu'une installation de climatisation comportant ce même dispositif.

### Art antérieur et problème technique

Les dispositifs de chauffage connus comportent un élément chauffant comme par exemple une résistance électrique et un boîtier servant de protection pour l'élément chauffant.

Il est connu des dispositifs avec un boîtier intégralement en plastique sujets à des incompatibilités électromagnétiques (plus connues sous le terme anglais EMC Failure pour « Electromagnetic Compatibilty Failure »).Toutefois, ces boîtiers offrent peu de résistance lors d'un accident si bien que, le dispositif n'étant plus protégé, ce dernier sera détruit.

Il est aussi connu des dispositifs avec un boîtier intégralement en aluminium. Ces boîtiers nécessitent une fabrication plus complexe et onéreuse. De plus, ces boîtiers génèrent plus de contraintes, au niveau de l'étanchéité que les boîtiers en plastique, telles que des traitements de surface ou un usinage précis.

Le document WO 2011/144976 A1 décrit un dispositif de chauffage comprenant au moins un élément chauffant et un boîtier, un moyen de protection réalisé sous forme d'une enveloppe composée au moins d'une demi-coquille entourant au moins partiellement le boîtier. Cependant, des vibrations néfastes au bon fonctionnement du dispositif de chauffage peuvent apparaître.

### Exposé de l'invention

La présente invention a pour objectif de résoudre au moins partiellement l'un de ces inconvénients, en proposant un dispositif de chauffage comprenant au moins un élément chauffant et un boîtier. Selon l'invention, le boîtier comporte en outre un moyen de protection réalisé sous la forme d'une enveloppe composée d'au moins une demi-coquille entourant au moins partiellement ledit boîtier, ainsi qu'un moyen de calage agencé entre le boîtier et le moyen de protection.

Des modes de réalisations particuliers selon l'invention proposent que :
- le moyen de protection est réalisé en un matériau différent de celui du boîtier ;
- le moyen de protection est réalisé en métal ;
- le moyen de protection comprend en outre des zones de protection spécifiques agencées sur les entrée et sortie de fluide ;
- le moyen de protection comprend des zones de cassures ;
- les zones de cassures sont situées au niveau des zones de protection spécifiques ;
- le moyen de protection est réalisé en deux demi-coquilles symétriques ;
- le dispositif de chauffage est apte à être maintenu entre le moyen de protection et la structure existante du véhicule.

L'invention concerne également une installation de chauffage, ventilation et/ou climatisation comprenant un dispositif de chauffage comme décrit précédemment.

### Brève description des figures

D'autres caractéristiques et avantages de l'invention ressortiront à la lecture de la description qui suit, en référence aux figures annexées, qui illustrent :
- La figure 1, illustre une vue éclatée d'un dispositif de chauffage selon l'art antérieur ;
- La figure 2, illustre une vue d'un dispositif de chauffage en vue assemblée selon l'art antérieur;
- La figure 3, illustre une représentation schématique selon une vue de haut du dispositif selon l'invention avant la mise en place du moyen de protection ;
- La figure 4a et 4b, illustrent une représentation schématique du dispositif selon l'invention après la mise en place du moyen de protection respectivement selon une vue de haut et de profil;
- La figure 5, illustre une vue du dispositif selon l'invention en vue assemblée avec un moyen de protection ;
- La figure 6 illustre une vue en coupe transversale du dispositif selon l'invention avec un moyen de protection ;
- La figure 7 illustre une vue du dispositif selon un mode de réalisation particulier de l'invention.

### Description détaillée de l'art antérieur

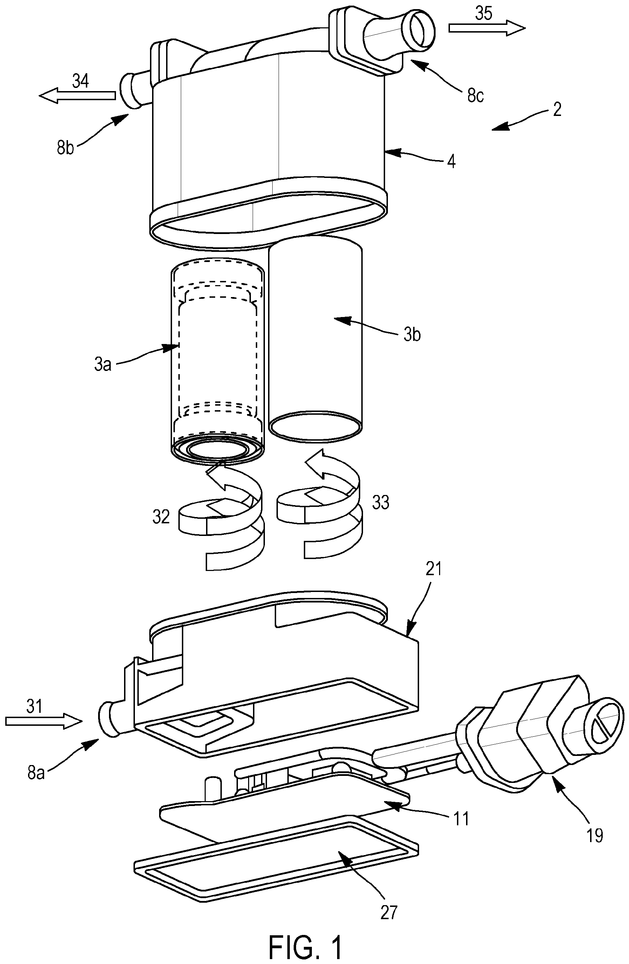

Comme illustré sur la figure 1, un dispositif de chauffage 2 selon l'art antérieur comprend un corps de chauffe comportant un ou plusieurs, ici deux, modules de chauffe 3a et 3b. Le dispositif de chauffage 2 comprend aussi un moyen de commande 11 pour contrôler le fonctionnement des modules de chauffe 3a et 3b. Le moyen de commande 11 peut, par exemple, prendre la forme d'un circuit imprimé, type PCB (de l'anglais « printed circuit board »), et commander, ainsi, l'alimentation électrique des modules de chauffe 3a, 3b.

Le dispositif de chauffage 2 tel que représenté sur la figure 1, comprend aussi un boîtier 4 réceptionnant le ou les modules de chauffe 3a, 3b ainsi que le circuit imprimé 11. Ce boîtier, tel que représenté sur la figure 1, permet de guider le fluide vers les modules de chauffe 3a, 3b afin que ce fluide soit chauffé par les modules. Le boîtier 4 comprend en outre une entrée de fluide 8a, ici réalisée sous la forme d'une tubulure, prévue pour l'admission du fluide à chauffer, et au moins une sortie de fluide 8b et/ou 8c, aussi réalisées sous la forme d'une tubulure, prévue pour évacuer le fluide réchauffé par les modules de chauffe 3a, 3b. Cet écoulement est représenté par les flèches 31 à 35 sur la figure 1. Le fluide peut provenir d'un circuit comme par exemple un circuit d'eau d'une installation de climatisation, chauffage ou ventilation. Le boîtier 4 comprend aussi une paroi de fond de boîtier 27 qui permet d'isoler le circuit imprimé 11 dans un espace fermé.

Le boîtier 4 présente des parois étanches auxquelles peuvent être adjoints des moyens d'étanchéité, comme par exemple des joints en élastomère, afin d'éviter toute infiltration de l'extérieur vers l'intérieur du dispositif.

Comme représenté sur la figure 1, le fluide est admis par l'entrée de fluide 8a et passe dans une chambre de distribution 21 conçue de manière à répartir le fluide dans l'ensemble de l'espace définie par la chambre de distribution 21. Le fluide est alors dirigé au travers des modules de chauffe 3a, 3b, ici réalisés sous la forme de cylindres creux, afin d'être réchauffé par les modules de chauffe 3a, 3b pour être ensuite évacué par une ou plusieurs sorties de fluide 8b et/ou 8c comme représenté par les flèches 31, à 35 sur la figure 1. Bien entendu, l'invention ne se limite pas au mode d'écoulement du fluide ni à la disposition des entrée et sortie de fluide 8a, 8b, 8c.

Toutefois, selon un mode de réalisation non représenté, il est envisageable que les modules de chauffe 3a, 3b soient réalisés sous la forme d'un barreau plein avec le fluide circulant entre le boîtier 4 et les modules de chauffe 3a, 3b.

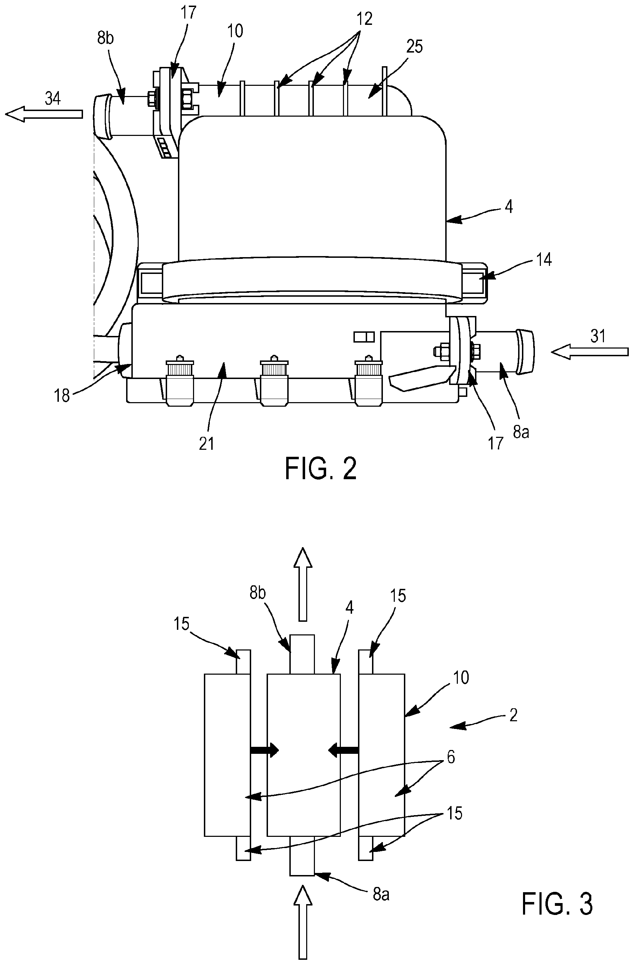

La figure 2 illustre le dispositif de chauffage assemblé selon un mode de réalisation différent de celui de la figure 1. Ici, le fluide est admis par l'entrée de fluide 8a et est réparti dans la chambre de distribution 21. Le fluide circule alors à travers les modules de chauffe et aboutit dans une chambre de collecte 25 communément appelée collecteur. Le fluide chauffé est alors évacué du dispositif par la sortie de fluide 8b.

Les modules de chauffe 3a, 3b et boîtier 4 sont soumis à des pressions internes dues au fluide. Il est ainsi envisageable de placer des moyens de serrage 14, telle qu'une bride de serrage, qui permettent de maintenir les éléments du dispositif de chauffage ensembles tout en augmentant la résistance du boîtier 4 à la pression interne engendrée par l'écoulement du fluide. Un autre moyen pour améliorer la résistance du boîtier 4 face à la pression du fluide est d'agencer des nervures de renforcement sur le boitier 4.

Le boîtier 4 illustré à la figure 2 peut aussi comporter une ouverture 18 permettant le passage de moyens d'alimentation électriques tels que des câbles électriques 19 alimentant, par exemple, le circuit imprimé 11 et/ou des éléments résistifs chauffants tels que les modules de chauffe 3a et 3b.

Toujours selon un mode de réalisation illustré à la figure 2, le boîtier 4 peut comprendre des zones de cassures 17. Ces zones correspondent à des zones avec des profils spécifiques comme, par exemple, une pièce apte à se fléchir ou avec une épaisseur réduite. En cas d'un événement provoquant un choc mécanique tel qu'une coalition entre deux voitures à grande vitesse, les zones de cassures 17 sont adaptées pour se rompre et désolidariser le dispositif de chauffage 2 du reste du circuit. Le dispositif de chauffage 2 étant libéré de toute contrainte mécanique, il peut se déplacer librement et éviter ainsi d'être écrasé ou de subir des efforts pouvant endommager son fonctionnement. De plus, les entrée et sortie de fluide 8a, 8b étant désolidarisées du dispositif de chauffage 2, le fluide sera évacuée au niveau des entrée ou sortie de fluide 8a, 8b, ce qui empêche le circuit imprimé 11 d'être noyée dans le fluide.

Ces zones de cassures 17 dans l'exemple représenté sur la figure 2 sont situées au niveau des entrée et sortie de fluide 8a, 8b. Toutefois, il est envisageable d'agencer ces zones de cassures 17 sur d'autres positions du boîtier 4 comme par exemple sur des points de fixation aptes à recevoir le dispositif de chauffage situés sur le véhicule.

### Description détaillée des modes de réalisation

Selon un premier mode de réalisation tel qu'illustré à la figure 3, le boîtier 4 est réalisé en plastique. Le plastique de par ses propriétés physiques, correspond à un matériau léger, facilement modulable selon le procédé de fabrication.

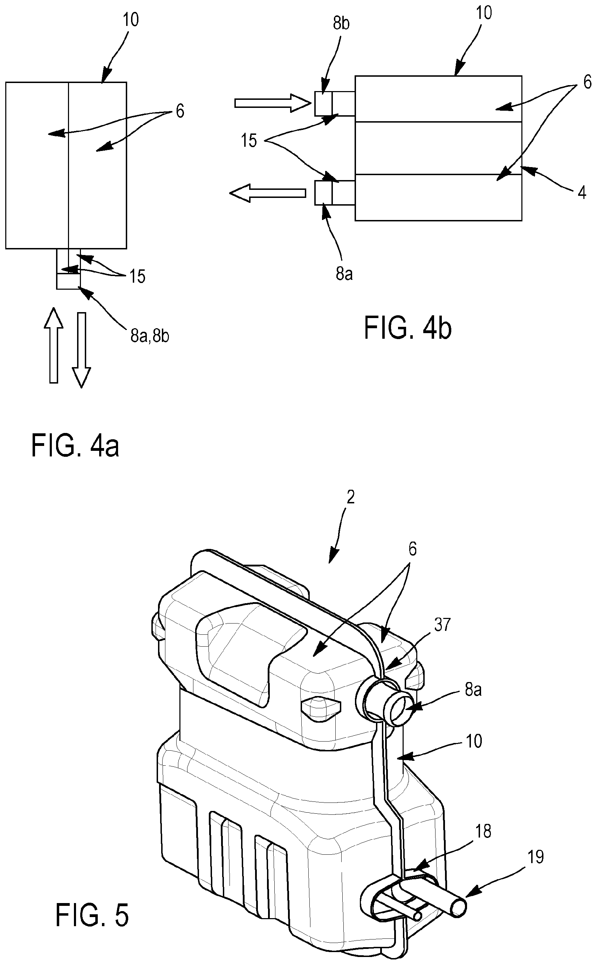

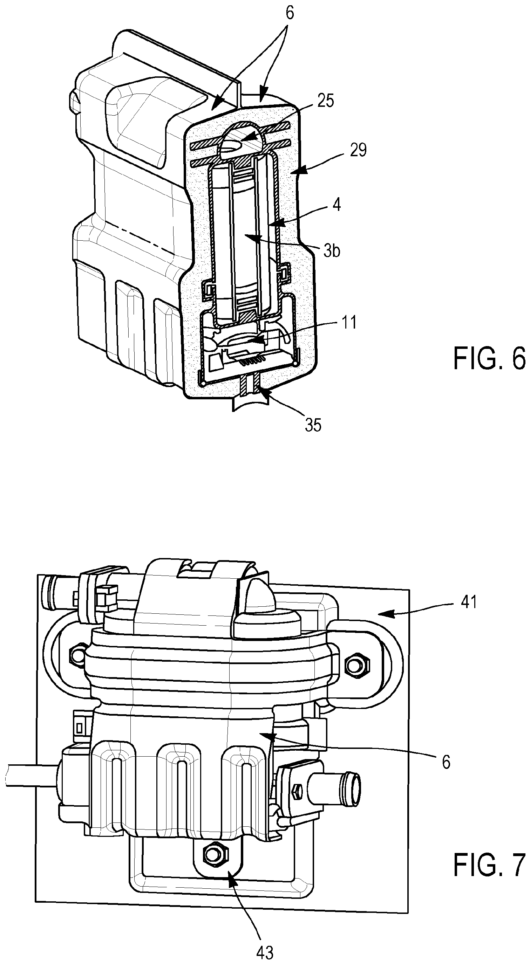

L'objet de l'invention porte sur un moyen de protection 10 pour ce boîtier 4 qui est réalisé sous la forme d'une enveloppe composée d'au moins une demi-coquille 6 entourant le boîtier 4. La ou les demi-coquilles 6 peuvent être en une ou plusieurs pièces. La ou les demi-coquilles 6 peuvent entourer le boîtier 4 de manière partielle comme représentée sur les figures 4b et 7 ou de manière complète comme représentée sur la figure 4a, 5 et 6. Dans le cas où une demi-coquille 6 est en une seule pièce, celle-ci peut être fixée au boîtier 4 par différents moyens de solidarisation comme par exemple de la colle ou des vis. Dans l'hypothèse où la demi-coquille 6 est constituée de deux ou plusieurs parties, celles-ci sont assemblées entre elles par-dessus le boîtier 4 par différents moyen de solidarisation, comme par exemple par sertissage, emboutissage, rivetage, soudure ou encore par clinchage lors du montage final. Bien évidement, il est envisageable selon un mode de réalisation non représenté d'avoir deux demi-coquilles 6 solidarisées au boîtier 4. L'invention ne se limite pas au sens d'assemblage des demi-coquilles 6, l'assemblage pouvant se faire par le haut et bas ou par les côtés.

Selon un aspect de l'invention, le moyen de protection 10 est réalisé en un matériau différent de celui du boîtier 4. Si bien que si le boîtier 4 est fait de plastique le moyen de protection 10 peut être réalisé en métal, comme par exemple, de l'aluminium. Cette caractéristique permet de compenser les risques d'incompatibilités électromagnétiques que présente le plastique. Il devient alors possible de cette manière d'éviter l'émission ou la réception d'onde électromagnétique issue du circuit imprimé 11.

Le moyen de protection 10 peut s'étendre sur l'ensemble du corps du boîtier 4 mais aussi sur les entrée et sortie de fluide 8a, 8b selon des zones de protection spécifiques référencées 15 sur la figure 3.

Il est aussi possible d'introduire les zones de cassures 37 au niveau des zones de protection spécifiques 15, comme représenté sur la figure 5, afin de pouvoir désolidariser ainsi le dispositif de chauffage 2 du reste du circuit en cas d'accident.

Les demi-coquilles 6 peuvent être symétriques, comme illustré sur la figure 5, ou asymétrique selon un mode de réalisation non représenté.

La figure 6 illustre le dispositif de chauffage 2 avec le moyen de protection 10 selon une coupe transversale. Un espace est disponible entre le boîtier 4 et le moyen de protection 10. Selon la présente invention, un moyen de calage 29, comme par exemple une matière pouvant s'expandre, du polystyrène, ou une couche de polypropylène, peut s'étendre au moins partiellement dans l'espace définit entre le boîtier 4 et le moyen de protection 10. Un tel moyen de calage 29 permet de caler le boîtier 4 et le dispositif de chauffage 2 et éviter qu'ils ne subissent de vibrations néfastes au bon fonctionnement du dispositif de chauffage 2. Le moyen de calage 29 peut présenter aussi d'autres propriétés, il peut par exemple absorber les chocs ou encore être un isolant thermique.

Comme illustré à la figure 6, il est aussi possible de prévoir une évacuation 35 avec membrane permettant l'évacuation de condensats stagnants au niveau du circuit imprimé 11 pour éviter la dégradation de celui-ci.

Selon le mode de réalisation particulier illustré à la figure 7, il est aussi possible d'envisager un moyen de protection 10 pour le boîtier 4 en réalisant une demi-coquille 6 qui englobent partiellement le boîtier. La demi-coquille 6 est fixée par tout moyen de fixation 43 (vis, clips,...) à une structure existante du véhicule 41 de façon à ce que le dispositif de chauffage 2 reste maintenu entre le moyen de protection 10 et la structure existante 41. Un tel mode de réalisation permet de gagner en volume.

L'invention concerne également une installation de chauffage, climatisation et aération comprenant un dispositif de chauffage comme décrit précédemment destiné à être installé dans un véhicule automobile.

Il doit être bien entendu toutefois que ces exemples de réalisation sont donnés à titre d'illustration de l'objet de l'invention. L'invention n'est pas limitée à ces modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaison des différents modes de réalisation décrits précédemment.

## Revendications

1. Dispositif de chauffage (2) comprenant au moins un élément chauffant (3) et un boîtier (4), un moyen de protection (10) réalisé sous la forme d'une enveloppe composée d'au moins une demi-coquille (6) entourant au moins partiellement ledit boîtier, **caractérisé en ce qu'**un moyen de calage (29) est agencé entre le boîtier (4) et le moyen de protection (10).

2. Dispositif selon la revendication 1, **caractérisé en ce que** le moyen de protection (10) est réalisé en un matériau différent de celui du boîtier (4).

3. Dispositif selon la revendication 1 ou 2, **caractérisé en ce que** le moyen de protection (10) est réalisé en métal.

4. Dispositif selon l'une des revendications précédentes, **caractérisé en ce que** le moyen de protection (10) comprend en outre des zones de protection spécifiques (15) agencées sur les entrée et sortie de fluide (8a, 8b, 8c).

5. Dispositif selon l'une des revendications précédentes, **caractérisé en ce que** le moyen de protection (10) comprend des zones de cassures (17,37).

6. Dispositif selon les revendications 4 et 5 , **caractérisé en ce que** les zones de cassures (17,37) sont situées au niveau des zones de protection spécifiques (15).

7. Dispositif selon l'une des revendications précédentes, **caractérisé en ce que** le moyen de protection (10) est réalisé en deux demi-coquilles (6) symétriques.

8. Dispositif selon l'une des revendications 1 à 6, **caractérisé en ce que** le dispositif de chauffage est apte à être maintenu entre le moyen de protection (10) et la structure existante du véhicule (41),

9. Installation de chauffage, ventilation et/ou climatisation pour véhicule automobile comprenant un dispositif de chauffage (2) selon l'une des revendications précédentes.

## Patentansprüche

1. Heizvorrichtung (2), die mindestens ein Heizelement (3) und ein Gehäuse (4) enthält, wobei eine Schutzeinrichtung (10), die in Form einer aus mindestens einer Halbschale (6) bestehenden Hülle hergestellt ist, das Gehäuse zumindest teilweise umgibt, **dadurch gekennzeichnet, dass** eine Fixiereinrichtung (29) zwischen dem Gehäuse (4) und der Schutzeinrichtung (10) angeordnet ist.

2. Vorrichtung nach Anspruch 1, **dadurch gekennzeichnet, dass** die Schutzeinrichtung (10) aus einem anderen Material als das Gehäuse (4) hergestellt ist.

3. Vorrichtung nach Anspruch 1 oder 2, **dadurch gekennzeichnet, dass** die Schutzeinrichtung (10) aus Metall hergestellt ist.

4. Vorrichtung nach einem der vorhergehenden Ansprüche, **dadurch gekennzeichnet, dass** die Schutzeinrichtung (10) außerdem spezifische Schutzzonen (15) enthält, die an den Fluideingängen und -ausgängen (8a, 8b, 8c) angeordnet sind.

5. Vorrichtung nach einem der vorhergehenden Ansprüche, **dadurch gekennzeichnet, dass** die Schutzeinrichtung (10) Bruchzonen (17, 37) enthält.

6. Vorrichtung nach den Ansprüchen 4 und 5, **dadurch gekennzeichnet, dass** die Bruchzonen (17, 37) sich im Bereich der spezifischen Schutzzonen (15) befinden.

7. Vorrichtung nach einem der vorhergehenden Ansprüche, **dadurch gekennzeichnet, dass** die Schutzeinrichtung (10) aus zwei symmetrischen Halbschalen (6) hergestellt wird.

8. Vorrichtung nach einem der Ansprüche 1 bis 6, **dadurch gekennzeichnet, dass** die Heizvorrichtung zwischen der Schutzeinrichtung (10) und dem existierenden Aufbau des Fahrzeugs (41) gehalten werden kann.

9. Heiz-, Lüftungs- und/oder Klimatisierungsanlage für ein Kraftfahrzeug, die eine Heizvorrichtung (2) nach einem der vorhergehenden Ansprüche enthält.

## Claims

1. Heating device (2) comprising at least one heating element (3) and a housing (4), a protection means (10) produced in the form of a shell made up of at least one half-shell (6) at least partially surrounding the said housing, **characterized in that** a wedging means (29) is arranged between the housing (4) and the protection means (10).

2. Device according to Claim 1, **characterized in that** the protection means (10) is made from a material different from that of the housing (4).

3. Device according to Claim 1 or 2, **characterized in that** the protection means (10) is made of metal.

4. Device according to one of the preceding claims, **characterized in that** the protection means (10) further comprises specific protection zones (15) arranged on the fluid inlets and outlets (8a, 8b, 8c) .

5. Device according to one of the preceding claims, **characterized in that** the protection means (10) comprises break zones (17, 37).

6. Device according to Claims 4 and 5, **characterized in that** the break zones (17, 37) are situated in the region of the specific protection zones (15).

7. Device according to one of the preceding claims, **characterized in that** the protection means (10) is produced in the form of two symmetrical half-shells (6).

8. Device according to one of Claims 1 to 6, **characterized in that** the heating device is able to be held between the protection means (10) and the existing structure of the vehicle (41).

9. Heating, ventilation and/or air-conditioning installation for a motor vehicle comprising a heating device (2) according to one of the preceding claims.
